# EUROPEAN PATENT SPECIFICATION

(11) **EP 0 806 984 B1**
(45) Date of publication and mention of the grant of the patent: **01.03.2000**
(21) Application number: 96903422.2
(22) Date of filing: 11.01.1996
(51) Int. Cl.: B01J 37/00

(54) **CATALYST CARRIER**
KATALYSATORTRÄGER
SUPPORT DE CATALYSEUR

(30) Priority: 01.02.1995 US 381808
(43) Date of publication of application: 19.11.1997
(73) Proprietor: NORTON CHEMICAL PROCESS PRODUCTS CORPORATION, Stow, Ohio 44224 (US)
(72) Inventor: GERDES, William, H., Hudson, OH 44236 (US); REMUS, Donald, J., Stow, OH 44224 (US); SZYMANSKI, Thomas, Hudson, OH 44236 (US)
(74) Representative: Richebourg, Michel François
(86) International application number: US9600325
(87) International publication number: WO9623586

(56) References cited:
- EP-A- 0 395 022
- FR-A- 2 175 762
- FR-A- 2 226 256
- US-A- 3 679 605
- US-A- 4 032 433
- US-A- 4 508 849

## Description

This invention relates to catalyst carriers and specifically to catalyst carriers based on ceramic materials such as alumina that may be used as supports for metal and metal oxide catalyst components of use in a variety of chemical reactions.

### Background of the Invention

The use of porous ceramic catalyst carriers has previously been described in a number of patents including USPP 5,100,859; 5,055,442; 5,037,794; and 4,874,739. Such carriers have a wide variety of potential applications in the catalytic field and are especially useful where the ceramic base is an alumina such as alpha alumina. While alpha alumina is often the preferred ceramic catalyst base it is understood that other ceramic materials such as silica, silicon carbide, silicon nitride, magnesia, titania, spinels and cordierite, as well as other forms of alumina may be used. In further discussions catalysts based on alpha alumina are used as exemplars but the teachings herein are understood to have a more general application.

A catalyst support needs to possess, in combination, at least a minimum surface area on which the catalytic component may be deposited, high water absorption and crush strength. The problem is that usually an increase in one can mean a reduction in another property. Thus high crush strength may mean low porosity. Often the balance is achieved by trial and error making the catalyst carrier art even more unpredictable than other chemical process art.

Carriers need to have a uniform degree of porosity and this may be achieved in a number of ways including the incorporation of burnout materials that are eliminated when the ceramic is fired to form the finished product. Typical burnout materials include charcoal, petroleum coke, ground walnut shells and the like. The problem is that such materials usually leave leachable residues that can significantly impair the performance of catalysts supported on carriers made using such burnout materials. Furthermore the actual content of such leachable material varies widely from batch to batch so that predictability is unsatisfactory.

USP 3,679,605 and USP 4,032,605 both teach the use of finely ground polyethylene as the burnout material that acts as a pore former. However these patents do not give indications of the ash content of the burnout materials or the physical properties of carriers made with these burnout materials relative to carriers made with others.

A way has now been found to design carriers with more confidence as to the final property balance. The carriers of the invention have an excellent balance of crush strength, abrasion resistance, porosity and catalytic performance that make them ideal for a wide range of catalytic applications.

### General Description of the Invention

The present invention provides a novel process for the production of a ceramic catalyst carrier which comprises mixing particulate components of the ceramic carrier with from about 0.5 to about 50 parts by weight, (based on 100 parts by weight of the ceramic components), of a polypropylene in the form of a powder having a volume average particle size of less than about 400 microns and an ash content of less than 0.1% by weight, and then firing to sinter the particulate components and form a carrier at a temperature sufficient to burn off the polypropylene.

The invention further provides a novel alpha alumina-based porous carrier material having a metallic leachables content of less than 2,000 ppm.

In a preferred process according to the invention the polypropylene particles have a volume average particle size of from 5 to 400 and more preferably from 10 to 300 microns and most preferably from 15 to 200 microns.

The particles can have any desired configuration but since the objective is to produce a carrier material with a high but uniform porosity, this is most efficiently achieved if the particles have a generally blocky, (that is more nearly spherical), configuration. The porosity is also influenced greatly by the particle size of the ceramic material particles from which it is made. Often indeed such particles and their sizes are the dominant factors and the particle size of the burnout material has only a marginal effect on the porosity.

The polypropylene contains no significant amounts of residual inorganic material as result of the method by which it was made. The polypropylene may be formed using an emulsion polymerization process or by mass polymerization, including suspension polymerization, which is often preferred since the polymer can be obtained in the form of very fine particles that are directly usable in the process of the invention. While such fine particles are readily obtainable by such techniques, they can also be provided by conventional comminution techniques.
The polypropylene burnout materials can also be used in conjunction with minor amounts of conventional burnout materials where the need for very low leachables is not quite so great and minor amounts of the residuals can be tolerated.

Burnout materials leave behind other materials commonly referred to as "ash" when ignited and this is used as a measure of the amount of "leachables" left in a ceramic material after burnout. The amount of ash and leachable material is quite constant for any particular organic polymeric burnout material and this is a significant advantage. The presence of leachables has now been shown to adversely affect the properties of the carrier, particularly the physical properties. It is therefore important to minimize these leachables without negatively impacting the selectivity of the catalysts deposited on such carriers.

There may not be an exact correspondence between ash content and the amount of leachables in the burnout material in view of the potential contribution to the leachables content of other components of the composition from which the carrier is formed including surfactants, temporary binders, bond materials and so on. These latter components are usually and preferably chosen with specific properties in mind and the leachables contributed are accepted as an unavoidable consequence. If the leachables contributed by the burnout material varies widely, (as is the case with traditional burnout materials such as ground walnut shells: see Table 2B below for example), the total leachables can vary unpredictably and often exceed the preferred maximum. The use of a burnout material with a known, stable amount of leachables allows the selection of the other composition components to establish a leachables level that will not exceed the desired maximum level.

As indicated above it is possible to define the preferred burnout material both in terms of the ash residue upon ignition or in terms of the metallic leachables that may be extracted from the finished carrier. In the case of the ash content, the amount should clearly be minimized so far as possible and a maximum level of 0.1% by weight is preferred. More preferred is a maximum level of 0.05%.

The most commonly encountered metals in the leachate are sodium, potassium, calcium and aluminum and the term "metallic leachables" will be used to refer to the sum of the leachable amounts of these four metals attributable to the burnout material. The amount of metallic leachables remaining after firing the carrier to remove the burnout material and resulting therefrom is desirably less than 2000 ppm, and preferably less than 1500 ppm, and most preferably less than 1000ppm, expressed in terms of the amount of the metal in the finished carrier.

The metallic leachables amount is measured by boiling a standard amount of the finished carrier in a standard volume of 10% nitric acid for 30 minutes. This extracts the metallic impurities in the form of the soluble nitrates which may then be separated and analyzed for the residual metallic values. This is then expressed as the ppm of that metal in the finished carrier. Some silica may also be extracted by this method but this is disregarded for the purposes of this exercise because of the variable contribution made by bond and ceramic components.

The material from which the carrier is made is not critical and any ceramic-based carrier is adaptable to the use of the organic polymeric burnout materials. The carrier can be for example an alumina-based carrier of the kind described in USP 5,266,548; USP 5,100,859; or USP 5,055,042.
Alternatively it can be based on silica, aluminosilicates, cordierite, zirconia, spinels, magnesia or titania as well as combinations of such materials. It is preferably based predominantly, (that is at least 90% by weight of the ceramic components), on alumina and particularly alpha alumina though minor amounts of other ceramic oxides such as zirconia, titania and/or alkaline earth metal oxides, (calcia, magnesia and strontia), may be present.

An example of a process for the production of the preferred alumina-based carriers of the invention comprises:
i) forming a mixture comprising:
   a. at least one particulate alumina component;
   b. from 1 to 50%, based on the weight of the total ceramic components, of a polypropylene burnout material having an ash content of less than 0.1%; and
   c. water in sufficient quantity to extrude the above mixture;
ii) extruding the mixture into the desired shapes; and
iii) firing to sinter the alumina particulates to produce a porous alpha alumina-based carrier with a surface area of from 0.40 to 1.50, and preferably from 0.40 to 1.25 m²/gm and less than 1500 ppm metallic leachables.

The catalyst carrier of the invention may comprise a number of alumina and optionally other ceramic-forming components chosen to contribute to the desired physical properties, including porosity, pore volume, crush strength and the like. Often a combination of two different alpha aluminas is preferred, one component having larger particles mixed with a second component having smaller particles, in weight ratios of from 10:90 to 90:10. The objective of this is to end up with a surface area, (in this document a reference to "surface area" is understood to mean the BET surface area measured using nitrogen or krypton as the adsorbed gas), in the finished product of from 0.4 to 5 m²/gm. The surface area in the finished carrier is somewhat less than for the free alumina particles. Thus a convenient mixture may comprise for example, two types of alpha alumina particles, the first having a surface area of about 1 m²/gm and the second having a surface area of 3 to 5 m²/gm. Other components such as titania in an amount of up to 5% by weight, may often confer particular advantage to such carrier materials.

It is usually preferred to add a ceramic bond material to the mixture to give added strength to the fired carrier. Conventional ceramic bond materials can be used in amounts of from 0.1 to 5% based on the weight of the ceramic components in the composition, and after firing these typically comprise components, (expressed as the oxides), such as silica, alumina, aluminosilicates, alkaline earth metal oxides, alkali metal oxides, iron oxide and titanium oxide, with the first two being the dominant components.

The preferred porous alpha alumina based carriers made by the process of the invention have a leachables content below 2000 ppm. In addition, by comparison with a carrier having the same porosity and packing density made using the same ceramic components and with conventional non-polymeric organic burnout materials, they display an attrition that is at least 10%, and preferably at least 20%, lower and a crush strength that is at least 10%, and preferably at least 20%, higher.

### Description of Preferred Embodiments

The invention is further described with reference to the following Examples which are for the purposes of illustration only and are not intended to imply any necessary limitation on the essential scope of the invention.

The result of using the polypropylene burnout material is a carrier with improved physical properties such as attrition and crush strength. These characteristics are intimately related to surface area, packing density and water absorption and can also be impacted by firing conditions and the nature of the ceramic components. However by holding the materials used and the firing conditions constant and varying only the nature of the burnout material, it has been possible to prove that the nature of the burnout material has a profound effect on the physical properties. This is a most surprising result that could not have been predicted on the basis of the prior art. Details of the extent of the improvement are to be found in Example 1 below.

### Example 1

This Example details the preparation of five sets of carriers according to the invention each of which is compared with a carrier made in exactly the same way except for the nature of the organic burnout material used.

In the carriers according to the invention the burnout material was powdered polypropylene with an average particle size of about 90 microns. The comparison material used as the burnout material ground walnut shells with an average particle size of about 177 microns. The basic material of the carrier was formulated as is described in US-A-5 384 302. The results are described in Tables 1A and 1B.

The carriers were made using the formulations described below. The mixing process used was as follows: The ceramic components, (270 parts of alpha alumina; 101 parts of gibbsite; 22 parts of boehmite; and about 0.6 parts of a titania derivative), are mixed with the burnout material. To this mixture were added: 5 parts of an inorganic bond material; 15 parts of an organic binder; 7 parts of starch and 0.5 part of boric acid and the components were mixed for about 45 seconds. Following this mixing operation the following components were added: water; 0.4 part of a non-ionic surfactant; the titania-containing component, (4.4 parts of a lactic acid chelate of titania containing about 0.6 part of titania, or 0.6 part of an anatase with a surface area of about 16 m²/gm (EX. 3 and 3C only)); and 8 parts of a fine alpha alumina seed component. The amount of water added was the amount necessary to make the mixture extrudable. Generally this is about 120-125 parts by weight. The mixture is mixed for a further 4.5 minutes and then vaseline is added to form an extrudable mixture. The mixture is then mixed for a further 3.5 minutes before being extruded in the form of hollow cylinders and dried to less than 2% uncombined water. These were then fired in a tunnel kiln with a maximum temperature of 1350-1450°C for about 4 hours.

The burnout material in the examples according to the invention was 30 parts of a particulate polypropylene having a maximum particle size of 150 microns, and an average particle size of about 90 microns. This represents about 7.5% by weight based on the weight of the ceramic components. In all the comparative examples which are paired with the examples illustrating the invention, the burnout material used was 42 parts of crushed walnut shells with an average particle size of 177 microns.

The leachables were measured for each carrier using the nitric acid solution technique described above.

The "Selectivity" is measured using a standard catalyst formulation deposited on the carrier and assessed against the selectivity shown by the same standard catalyst on a standard carrier. In each case a standard gas flow containing ethylene, oxygen, carbon dioxide and inert gases and comprising 25% by volume of ethylene was passed over the catalyst. The temperature is adjusted so as to achieve an ethylene oxide production level of 1.5%. The selectivity is then measured at that production level. Clearly if the selectivity of the standard can be exceeded by even a small amount, this is an advantage. This is even more attractive if it can be achieved at a lower temperature. The standard catalyst/carrier combination at a 1.5% ethylene oxide production level had a selectivity of 81.7 +/- 0.5%. The Tables indicate the average of two runs and show the temperature selectivity obtained at a production level of 1.5% of ethylene oxide.

The flat plate crush strength, (called here "C.S."), of the carrier is measured on a Compton Tensile Tester, model 50-OP) and the value given is in newtons (pounds).

"Water Absorption" is the percent increase in weight of the carrier after being immersed in water and re-weighed.

The settled packing density, ("Packing Density" or simply "P.D."), is measured by ASTM D-4699-87, modified by the use of cylinder with an inside diameter of 9.53 cm (3 3/4 inches) and a length of 45.72 cm (18 inches). The units are g/cm³ (pounds/cubic foot).

The surface area, ("S.A."), is the BET surface area measured using nitrogen or krypton as the adsorbate and is given in m²/gm.

The attrition resistance, ("Attrition"), is the amount of carrier weight loss measured as a percentage using ASTM D-4058-92.

**TABLE 1A**

| **PROPERTY** | **EX.1** | **EX.IC** | **EX.2** | **EX.2C** | **EX.3** | **EX.3C** |
|---|---|---|---|---|---|---|
| **FIRED TEMP. °C** | 1420-5 | 1420-5 | 1420-5 | 1420-5 | 1420-5 | 1420-5 |
| **SURFACE AREA** | 0.86 | 0.9 | 0.93 | 1.04 | 1.01 | 0.94 |
| **PACK.DEN.** | (50.9) 0.82 | (49.0) 0.78 | (46.3) 0.74 | (45.3) 0.73 | (48.5) 0.78 | (48.6) 0.78 |
| **WATER ABSORP.** | 35.7 | 38 | 41.6 | 43.4 | 38.7 | 39.3 |
| **AVERAGE C.S.** | (17.6) 78.3 | (13.1) 58.3 | (12.8) 56.9 | (9.3) 41.4 | (15.6) 69.4 | (12.7) 56.5 |
| **ATTRITION** | 11.4 | 15.9 | 16.4 | 21.2 | 6.8 | 10.4 |
| **Leachable Na** | 321ppm | 562ppm | 488ppm | 486ppm | 395ppm | 472ppm |
| **Leachable K** | 145ppm | 279ppm | 187ppm | 252ppm | 142ppm | 252ppm |
| **Leachable Al** | 601ppm | 1116pm | 866ppm | 967ppm | 622ppm | 1014pm |
| **Leachable Ca** | 231ppm | 371ppm | 242ppm | 348ppm | 224ppm | 378ppm |
| **TEMPERATURE °C** | 229 | 233 | 234 | 229 | 227 | 227 |
| **SELECTIVITY** | 83.2% | 83.3% | 83% | 82.7% | 83.3% | 83.1% |

**TABLE 1B**

| **PROPERTY** | **EX.4** | **EX.4C** | **EX.5** | **EX.5C** |
|---|---|---|---|---|
| **FIRED TEMP. °C** | 1385-90 | 1385-90 | 1385-90 | 1385-90 |
| **SURFACE AREA** | 1.04 | 1.05 | 1.09 | 1.23 |
| **PACK.DEN.** | (47.5) 0.76 | (47.1) 0.75 | (44.7) 0.72 | (43.3) 0.69 |
| **WATER ABSORP.** | 39.7 | 40.6 | 44.3 | 46.5 |
| **AVERAGE C.S.** | (15.7) 69.8 | (16.5) 73.4 | (11.3) 50.3 | (7.7) 34.3 |
| **ATTRITION** | 13.5 | 19.3 | 19.3 | 25.6 |
| **Leachable Na** | 417ppm | 721ppm | 641ppm | 592ppm |
| **Leachable K** | 210ppm | 408ppm | 310ppm | 415ppm |
| **Leachable Al** | 847ppm | 1457ppm | 1190ppm | 1204ppm |
| **Leachable Ca** | 309ppm | 495ppm | 354ppm | 497ppm |
| **TEMPERATURE °C** | 227 | 226 | 228 | 232 |
| **SELECTIVITY** | 83.2% | 83.1% | 83.2% | 83.3% |

As can be seen, the carriers in accordance with the invention allow a degree of selectivity to the desired product that is at least as high and is often higher than that obtained using conventional burnout materials. In addition the physical properties of the carriers, particularly those of attrition resistance and crush strength are significantly improved as a result of the substitution. These improvements are considered extremely significant and very surprising and occur for each of the pairs presented for comparison at widely differing levels of physical properties.

It will also be appreciated that the lower firing temperature used in the Table 1B examples resulted in an overall higher leachables content and that the beneficial effect on the physical properties was most apparent at the higher firing temperature.

### Example 2

This Example illustrates the ash content of various burnout materials. In each case the amount of ash obtained after pyrolyzing the burnout material is given as a percentage of the original weight. The constituents of the ash were also measured using a plasma emission scanner. The results are given in parts per million based on the metal atom content or in terms of the % by weight where this is sufficiently large. It should be understood however that, in the carrier, the metals are usually present as oxides. This gives an indication of the amount of leachable material that may remain in the carrier after it has been formed. The burnout materials tested were as follows:

| Organic Polymers | |
|---|---|
| Polyketone | A |
| Poly-4-methyl-1-pentene | B |
| Polybutylene terephthalate | C |
| Styrene/butadiene/isoprene block copolymer | D |
| Polyethylene terephthalate | E |
| Ethoxylated Cellulose | F |
| Polyhexamethylene adipamide | G |
| Branched polyketone | H |

| Ground Walnut Shells | |
|---|---|
| Lot 2419 | 1 |
| Lot 2434 | 2 |
| Lot 2561 | 3 |
| Lot 2611 | 4 |

The results are set forth in Tables 2A and 2B below.
Values followed by an asterisk are % by weight. All others are ppm. This applies also to Tables 3 and 4.

**TABLE 2A**

| | **A** | **B** | **C** | **D** | **E** | **F** | **G** | **H** |
|---|---|---|---|---|---|---|---|---|
| **Ni** | <1 | <1 | <1 | <1 | 1 | 9 | <1 | <1 |
| **Cd** | <1 | <1 | <1 | <1 | <1 | <1 | <1 | <1 |
| **Zn** | 1 | 21 | <1 | <1 | <1 | <1 | <1 | <1 |
| **Si** | 1 | <1 | <1 | <1 | 4 | 7 | <1 | 6 |
| **B** | 1 | <1 | <1 | <1 | <1 | <1 | <1 | <1 |
| **p** | 300 | <10 | <10 | <10 | 67 | 74 | <10 | <10 |
| **Mn** | 1 | 1 | <1 | <1 | 64 | <1 | <1 | <1 |
| **Mg** | 5 | <1 | <1 | <1 | <1 | 11 | <1 | <1 |
| **Mo** | <1 | <1 | <1 | <1 | <1 | <1 | <1 | <1 |
| **V** | <1 | <1 | <1 | <1 | <1 | <1 | <1 | <1 |
| **Ti** | 2 | 1 | 96 | <1 | 1 | <1 | <1 | <1 |
| **Cu** | <1 | <1 | <1 | <1 | <1 | <1 | <1 | <1 |
| **Co** | <1 | <1 | <1 | <1 | 55 | <1 | <1 | <1 |
| **Al** | 8 | 2 | <1 | <1 | 1 | 3 | <1 | 2 |
| **Pb** | 8 | <1 | <1 | <1 | <1 | 1 | <1 | <1 |
| **Fe** | 3 | 1 | <1 | 1 | <1 | 2 | 1 | 2 |
| **K** | <1 | <1 | <1 | <1 | <1 | 7 | <1 | <1 |
| **Na** | 5 | 1 | <1 | <1 | <1 | -- | <1 | <1 |
| **Cr** | 50 | <1 | <1 | <1 | <1 | 6 | <1 | <1 |
| **Ca** | 800 | <1 | <1 | <1 | 1 | 106 | <1 | <1 |
| **Ash%** | 18 | <.01 | .01 | <.01 | .08 | .30 | <.01 | <.01 |

From the above data it will be apparent that Compound A, (which appeared to contain significant catalyst residue) and Compound F, (the cellulose derivative which is not considered to be a synthetic polymeric burnout material), are far less satisfactory than the others tested.

**TABLE 2B**

| | **1** | **2** | **3** | **4** |
|---|---|---|---|---|
| **Ni** | 77 | <40 | <90 | <40 |
| **Cd** | <20 | <40 | <90 | <40 |
| **Zn** | 42 | 47 | <90 | 64 |
| **Si** | 5.6* | 2.9* | 2.8* | 4.1* |
| **B** | 670 | 870 | 730 | 830 |
| **p** | 1.35* | 1.40* | 1.40* | 1.55* |
| **Mn** | 780 | 630 | 450 | 640 |
| **Mg** | 0.97* | 1.12* | 1.23* | 1.26* |
| **Mo** | 86 | 67 | <90 | 85 |
| **V** | 73 | 45 | <90 | 53 |
| **Ti** | 970 | 640 | 720 | 880 |
| **Cu** | 290 | 155 | 130 | 300 |
| **Co** | <20 | <40 | <90 | <40 |
| **Al** | 0.64* | 0.56* | 0.52* | 0.85* |
| **Pb** | 650 | 0.12* | 0.17* | 0.13* |
| **Fe** | 1.06* | 0.35* | 0.35* | 0.59* |
| **K** | 3.5* | 9.7* | 12.6* | 9.2* |
| **Na** | 1.57* | 0.29* | 0.42* | 0.54* |
| **Cr** | 0.54* | 0.71* | 0.78* | 0.80* |
| **Ca** | 6.7* | 7.0* | 9.0* | 8.6* |
| **Ash%** | 1.24 | 0.55 | 0.56 | 0.73 |

Further Examples of the residual ash from walnut shells is provided in the following Table 3 wherein the batches of shells are identified as "5" to "9", also shows the variability of the ash and residuals content.

**Table 3**

| | **5** | **6** | **7** | **8** | **9** |
|---|---|---|---|---|---|
| **Al** | 1.4% | 1.3% | 0.62% | 1.0% | 0.97% |
| **Si** | 0.81% | 1.1% | 0.49% | 0.59% | 1.1% |
| **P** | 0.98% | 1.1% | 0.70% | 0.60% | 2.8% |
| **S** | 0.12% | 0.14% | 0.12% | 0.08% | 0.14% |
| **K** | 8.4% | 11.0% | 6.0% | 4.8% | 9.0% |
| **Ca** | 5.4% | 6.2% | 4.9% | 2.0% | 6.0% |
| **Fe** | 0.10% | 0.18% | 0.13% | 0.19% | 0.21% |
| **Sr** | 0.05% | 0.06% | 0.04% | 0.03% | 0.05% |
| **Ba** | 0.02% | 0.03% | 0.02% | 0.01% | 0.03% |
| **Pt** | 0.47% | 0.50% | 0.19% | 0.25% | 0.29% |
| **Ash%** | 0.4% | 0.49% | 0.60% | 0.60% | 0.59% |

The above data were obtained using an X-Ray fluoresecence technique. The ash percentage is of course based on the original weight of walnut shells before they were burned whereas the elemental percentages are based on the total weight of the ash. The platinum impurity was derived from the platinum dish used in the ashing process

The carriers of the present invention are useful in a variety of catalytic applications in which a fluid is contacted with a catalyst supported on a carrier at elevated temperatures. There are many such processes in the petrochemical industry but the present carrier has proved itself particularly suitable in the catalytic formation of ethylene oxide from a gas stream comprising ethylene and oxygen. The utility of the present invention is however not so limited.

### Example 3

This Example shows the improved physical properties that result from the substitution of a conventional walnut shells burnout material with ground polypropylene in a carrier formulation similar to that used in Example 1 with the difference that no titania was used. The amount of the polypropylene component represented about 12.5% of the weight of the ceramic components.

Two carriers were made up from an identical formulation with the only difference being in the identity of the burnout material.
Formulation A comprised a polypropylene with an average particle size of 80-100 microns.
Formulation B comprised ground walnut shells with an average particle size of about 177 microns.

The properties of the two carriers are set forth in Table 5 below.

**Table 5**

| | **FORMULATION A** | **FORMULATION B** |
|---|---|---|
| **Firing Temp. (°C)** | 1470-80 | 1470-80 |
| **Surface Area (m**^{**2**}**/gm)** | 1.13 | 1.00 |
| **Pack. Dens. (lbs/ft**^{**3**}**)** **g/cm**^{**3**} | (43.5) 0.70 | (45.0) 0.72 |
| **Crush Strength (lbs)** **N** | (8.9) 84.1 | (16.5) 73.4 |
| **Attrition (%)** | 16.2 | 18.5 |
| **Leachables (10% nitric)** | | |
| **Na** | 348 | 668 |
| **K** | 150 | 358 |
| **Al** | 642 | 1440 |
| **Ca** | 220 | 506 |

## Claims

1. A process for the production of a catalyst carrier which comprises mixing particulate ceramic components with from 0.5 to 50 parts by weight, (based on 100 parts by weight of the ceramic components), of a polypropylene in the form of a powder having a volume average particle size of less than 400 microns and an ash content of less than 0.1% by weight, and then firing at a temperature sufficient to burn off the polypropylene, sinter the particulate components and form a carrier.

2. A process according to Claim 1 in which the polypropylene burnout material is present in an amount that is from 1 to 25% of the weight of the ceramic components.

3. A process according to Claim 1 in which the ceramic carrier comprises at least 90% by weight of alpha alumina.

4. A process according to Claim 1 in which the polypropylene has an ash content of less than 0.05% by weight.

5. A process according to Claim 1 in which a ceramic bond material is added to the extrudable mixture in an amount that is from 0.1 to 5% of the weight of the ceramic components in the mixture.

6. A process for the production of a catalyst carrier which comprises:
i) forming a mixture comprising:
a. at least one particulate alumina component;
b. from 1 to 25%, based on the weight of the total ceramic components, of a particulate polypropylene burnout material; and
c. water in sufficient quantity to extrude the above mixture;
ii) extruding the mixture; and
iii) firing the extrudate to sinter the ceramic particulates, burn out the burnout material, and produce a porous carrier with a surface area of from 0.4 to 1.5 m²/g and less than 1500 ppm metallic leachables.

7. A process for the production of an alpha alumina-based carrier material according to Claim 6 in which a ceramic bond material is added to the extrudable mixture in an amount that is from 0.1 to 5% of the weight of the ceramic components in the mixture.

8. An unfired body comprising particulate ceramic components and from 0.5 to 50% by weight of a polypropylene burnout material having an ash content of less than 0.1% by weight.

9. An unfired body according to Claim 8 in which at least 90% by weight of the ceramic components are selected from alpha alumina and precursors of alpha alumina.

10. An unfired body according to Claim 8 in which the polypropylene burnout material has an average particle size of from 5 to 400 microns.

11. An unfired body according to Claim 10 which further comprises from 0.1 to 5% by weight based on the weight of the ceramic components, of a ceramic bond material.

12. An unfired body comprising ceramic components comprising predominantly particulate alpha alumina and precursor of alpha alumina and from 1 to 25% by weight based on the weight of the ceramic components of a polypropylene burnout material having an ash content of less than 0.1% by weight and a volume average particle size of from 15 to 200 microns.

13. An unfired body according to Claim 12 which also comprises a ceramic bond material in an amount of from 0.1 to 5% by weight, based on the weight of the ceramic components.

14. An unfired body according to Claim 13 in which the ceramic components comprise up to 5% by weight of a titania or a titania precursor.

## Patentansprüche

1. Ein Verfahren zur Herstellung eines Katalysatorträgers, das Verfahren umfassend Mischen von partikulären, keramischen Bestandteilen mit 0,5 bis 50 Gewichtsteilen (bezogen auf 100 Gewichtsteile der keramischen Bestandteile) eines pulverförmigen Polypropylens mit einer durchschnittlichen Volumenpartikelgröße von weniger als 400 µm und einem Aschegehalt von weniger als 0,1 Gewichts-% und anschließendes Brennen bei einer Temperatur, die ausreichend ist, um das Polypropylen auszubrennen, die partikulären Bestandteile zu sintern und einen Träger zu formen.

2. Ein Verfahren gemäß Anspruch 1, worin das Polypropylen in einer Menge von 1 bis 25 % des Gewichts der keramischen Bestandteile anwesend ist.

3. Ein Verfahren gemäß Anspruch 1, worin der keramische Träger mindestens 90 Gewichts-% von Alpha-Aluminiumoxid umfaßt.

4. Ein Verfahren gemäß Anspruch 1, worin das Polypropylen einen Aschegehalt von weniger als 0,05 Gewichts-% hat.

5. Ein Verfahren gemäß Anspruch 1, worin ein keramisches Bindemittel zu dem extrudierbaren Gemisch in einer Menge von 0,1 bis 5 % des Gewichts der keramischen Bestandteile in dem Gemisch zugefügt wird.

6. Ein Verfahren zur Herstellung eines Katalysatorträgers, welches umfaßt:
i) Formen eines Gemisches umfassend:
a. mindestens eine partikuläre Aluminiumoxidkomponente;
b. von 1 bis 25 %, bezogen auf das Gewicht der gesamten keramischen Bestandteile, eines partikulären Polypropylenausbrennmaterials; und
c. Wasser in einer ausreichenden Menge, um das obige Gemisch zu extrudieren;
ii) Extrudieren des Gemisches; und
iii) Brennen des Extrudats, um das keramische partikuläre Material zu sintern, das Ausbrennmaterial auszubrennen und einen porösen Träger mit einer Oberfläche von 0,4 bis 1,5 m²/g und weniger als 1500 ppm metallisches, extrahierbares Material herzustellen.

7. Ein Verfahren für die Herstellung eines Trägermaterials auf Alpha-Aluminiumoxid-Basis gemäß Anspruch 6, worin ein keramisches Bindemittel zu dem extrudierbaren Gemisch in einer Menge von 0,1 bis 5 % des Gewichts der keramischen Bestandteile in dem Gemisch hinzugefügt wird.

8. Ein ungebrannter Körper, umfassend partikuläre, keramische Bestandteile und von 0,5 bis 50 Gewichts-% eines Polypropylenausbrennmaterials mit einem Aschegehalt von weniger als 0,1 Gewichts-%.

9. Ein ungebrannter Körper gemäß Anspruch 8, worin mindestens 90 Gewichts-% der keramischen Bestandteile ausgewählt sind aus Alpha-Aluminiumoxid und Vorläufern von Alpha-Aluminiumoxid.

10. Ein ungebrannter Körper gemäß Anspruch 8, worin das Polypropylenausbrennmaterial eine durchschnittliche Partikelgröße von 5 bis 400 pm hat.

11. Ein ungebrannter Körper gemäß Anspruch 10, weiter umfassend von 0,1 bis 5 Gewichts-%, bezogen auf das Gewicht der keramischen Bestandteile, eines keramischen Bindemittels.

12. Ein ungebrannter Körper, umfassend keramische Bestandteile, umfassend vorherrschend partikuläres Alpha-Aluminiumoxid und Vorläufer von Alpha-Aluminiumoxid und von 1 bis 25 Gewichts-%, bezogen auf das Gewicht der keramischen Bestandteile, eines Polypropylenausbrennmaterials mit einem Aschegehalt von weniger als 0,1 Gewichts-% und einer durchschnittlichen Volumenpartikelgröße von 15 bis 200 µm.

13. Ein ungebrannter Körper gemäß Anspruch 12, der auch ein keramisches Bindemittel in einer Menge von 0,1 bis 5 Gewichts-%, bezogen auf das Gewicht der keramischen Bestandteile, umfaßt.

14. Ein ungebrannter Körper gemäß Anspruch 13, worin die keramischen Bestandteile bis zu 5 Gewichts-% eines Titanoxids oder eines Titanoxidvorläufers umfassen.

## Revendications

1. Procédé pour la fabrication d'un support de catalyseur qui comprend le mélange de composants de céramiques particulaires ayant de 0,5 à 50 parties en poids, (basé sur 100 parties en poids des composants céramiques), d'un polypropylène sous la forme d'une poudre présentant une dimension en volume ("volume ...size") moyenne de particule de moins de 400 microns et une teneur en cendres de moins de 0,1 % en poids, et ensuite le chauffage à une température suffisante pour brûler le polypropylène, fritter les composants particulaires et former un support.

2. Procédé selon la revendication 1, dans lequel le matériau de brûlage de polypropylène est présent en une quantité qui s'étend de 1 à 25 % du poids des composants céramiques.

3. Procédé selon la revendication 1, dans lequel le support céramique comprend au moins 90 % en poids d'une alumine de type alpha.

4. Procédé selon la revendication 1, dans lequel le polypropylène présente une teneur en cendres de moins de 0,05 % en poids.

5. Procédé selon la revendication 1, dans lequel un matériau de liaison en céramique est ajouté au mélange d'extrusion ("extrudable mixture") en une quantité qui s'étend de 0,1 à 5 % du poids des composants céramiques dans le mélange.

6. Procédé pour la fabrication d'un support de catalyseur qui comprend :
i) la formation d'un mélange comprenant :
a. au moins un composant d'alumine particulaire ;
b. de 1 à 25 %, basé sur le poids de la totalité des composants céramiques, d'un matériau de brûlage de polypropylène particulaire, et
c. de l'eau en quantité suffisante pour extruder le mélange ci-dessus ;
ii) l'extrusion du mélange ; et
iii) le chauffage du produit d'extrusion pour fritter les particules céramiques, brûler le matériau de brûlage, et produire un support poreux ayant une surface s'étendant de 0,4 à 1,5 m²/g et inférieure à 1500 ppm de résidus de frittage métalliques (« metallic leachables »).

7. Procédé pour la fabrication d'un matériau support basé sur une alumine de type alpha selon la revendication 6, dans lequel un matériau de liaison céramique est ajouté au mélange d'extrusion en une quantité qui s'étend de 0,1 à 5 % du poids des composants céramiques dans le mélange.

8. Corps non brûlé ("unfired body") comprenant des composants de céramique particulaires et de 0,5 à 50 % en poids d'un matériau de brûlage de polypropylène présentant une teneur en cendres inférieure à 0,1 % en poids.

9. Corps non brûlé selon la revendication 8, dans lequel au moins 90 % en poids des composants céramiques sont sélectionnés à partir d'alumine de type alpha et de précurseurs d'alumine de type alpha.

10. Corps non brûlé selon la revendication 8, dans lequel le matériau de brûlage de polypropylène présente une taille moyenne de particule s'étendant de 5 à 400 microns.

11. Corps non brûlé selon la revendication 10, comprenant en outre de 0,1 à 5% en poids basé sur le poids des composants céramiques, d'un matériau de liaison céramique.

12. Corps non brûlé comprenant des composants céramiques comprenant de façon prédominante de l'alumine de type alpha particulaire et un précurseur d'alumine de type alpha et de 1 à 25 % en poids basé sur le poids des composants céramiques d'un matériau de brûlage de polypropylène présentant une teneur en cendres inférieure à 0,1% en poids et une dimension en volume moyenne de particule s'étendant de 15 à 200 microns.

13. Corps non brûlé selon la revendication 12, comprenant également un matériau de liaison céramique en une quantité s'étendant de 0,1 à 5 % en poids, basé sur le poids des composants céramiques.

14. Corps non brûlé selon la revendication 13, dans lequel les composants céramiques comprennent jusqu'à 5 % en poids d'un titane ou d'un précurseur de titane.
